Europäisches Patentamt

European Patent Office

Office européen des brevets

(11) Veröffentlichungsnummer: **0 268 724**
B1

(12)                    EUROPÄISCHE PATENTSCHRIFT

(45) Veröffentlichungstag der Patentschrift:
15.03.89

(51) Int. Cl.⁴: **G01M 1/24,** G01M 1/02,
B23B 49/04

(21) Anmeldenummer: **86890329.5**

(22) Anmeldetag: **26.11.86**

(54) **Verfahren und Maschine zum wuchtenden Zentrieren teilweise spanend zu bearbeitender Werkstücke, insbesondere Kurbelwellen.**

(43) Veröffentlichungstag der Anmeldung:
01.06.88 Patentblatt 88/22

(45) Bekanntmachung des Hinweises auf die Patenterteilung:
15.03.89 Patentblatt 89/11

(84) Benannte Vertragsstaaten:
AT DE FR GB IT

(56) Entgegenhaltungen:
DE-A- 2 622 048
DE-C- 590 759
FR-A- 1 046 748
US-A- 2 804 775
US-A- 4 446 732

PATENT ABSTRACTS OF JAPAN, Band 10,
Nr. 260 (P-494)[2316], 5. September 1986; &
JP-A-61 86 628

(73) Patentinhaber: **GFM Gesellschaft für Fertigungstechnik und Maschinenbau Gesellschaft m.b.H.,
Ennserstrasse 14, A-4403 Steyr(AT)**

(72) Erfinder: **Blaimschein, Gottfried, Dipl.-Ing.,
Arnhalmweg 33, A-4407 Steyr(AT)**

(74) Vertreter: **Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7, A-4020 Linz(AT)**

## Beschreibung

Die Erfindung bezieht sich auf ein Verfahren zum wuchtenden Zentrieren teilweise spanend zu bearbeitender Werkstücke, insbesondere Kurbelwellen, durch stirnseitiges Setzen von Zentrierbohrungen, bei dem das Werkstück vor der Bearbeitung bezüglich seiner Drehachse im Sinne einer Unwuchtverminderung querverlagert und dann nach einem Ablängen an den Endflächen mit den die gewuchtete Zentrumslage und die zugehörende Drehachse festlegenden Zentrierbohrungen versehen wird, sowie auf eine Maschine zur Durchführung dieses Verfahrens.

Aufgrund des steten Fortschritts in der Entwicklung der Schmiede- und Gußtechnik u.dgl. ist es auch bei Werkstücken, die als umlaufende Maschinenteile Verwendung finden, wie Kurbel- oder Nockenwellen, nicht mehr notwendig, das gesamte Werkstück nach dem Rohformen durch Gießen oder Schmieden usw. spanend fertig zu bearbeiten, sondern es genügt, die Lager- und Gleitflächen, gegebenenfalls Spannflächen und Richtflächen od.dgl. Werkstückbereiche zu bearbeiten, was die Werkstückfertigung wesentlich rationalisiert. Allerdings bleibt als abschließender Arbeitsschritt bei der Fertigstellung der Werkstücke ein Wuchten erforderlich und dieses Wuchten bereitet bei schlechter Massenverteilung oft beträchtliche Schwierigkeiten, da zum Auswuchten für den zu erzielenden Massenausgleich Material aus dem Werkstück durch Bohren zu entfernen ist und in Extremfällen durch die fehlende Möglichkeit, dem Werkstück entsprechend viel Masse auszubohren, ein einwandfreies Auswuchten nicht mehr erreicht werden kann. Um dieses abschließende Wuchten der Werkstücke zu vereinfachen, wird auch bereits ein Vorwuchten durch ein wuchtendes Zentrieren der Werkstücke vor der Bearbeitung vorgenommen, wobei das Werkstück gegenüber seiner idealen geometrischen Drehachse in Abhängigkeit von der auftretenden Unwucht querverlagert und dann durch Setzen der Zentrierbohrungen in der korrigierten Werkstücklage die die ursprünglich vorhandenen Unwuchten ausgleichende neue Zentrumslage samt zugehörender Drehachse festgelegt wird. Bisher ist aber die gesamte Werkstückmasse und die gesamte Massenverteilung für das wuchtende Zentrieren maßgebend und das Werkstück wird dynamisch ausgewuchtet, was einerseits recht umständlich ist und andererseits unbefriedigend bleibt, da die nachfolgende teilweise spanende Bearbeitung des Werkstückes die Massen und die Massenverteilung verändert und sich daher nach der Fertigstellung des Werkstückes für die endgültige Wuchtung erst wieder kaum eine Vereinfachung ergibt.

Der Erfindung liegt daher die Aufgabe zugrunde, diese Mängel zu beseitigen und ein Verfahren der eingangs geschilderten Art so zu verbessern, daß im Zuge der Werkstückfertigung auf rationelle Weise stets ein einwandfreies Werkstückwuchten gewährleistet ist. Darüber hinaus soll eine Maschine geschaffen werden, die sich besonders gut zur Durchführung dieses Verfahrens eignet.

Die Erfindung löst diese Aufgabe dadurch, daß für die Bestimmung von Größe und Richtung der Werkstückverlagerung die durch die zu bearbeitenden Werkstückbereiche bedingten Unwuchten mißachtet und nur die durch die unbearbeitet bleibenden Werkstückbereiche bedingten Unwuchten herangezogen werden. Die aufgrund dieser Querverlagerung mit den Zentrierbohrungen fixierte Drehachse verläuft daher lediglich in bezug auf die unbearbeitet bleibenden Werkstückteile wuchtend und führt demnach für das an die Bearbeitung anschließende End-Wuchten zu einem optimalen Vor-Wuchten, da ja die Werkstückbearbeitung auf die durch die Zentrierbohrungen bestimmte Drehachse ausgerichtet ist und unter Beseitigung der Unwuchten die durch die entsprechende konstruktive Werkstückgestaltung vorbestimmte, zur Drehachse unwuchtige Massenverteilung mit sich bringt. Das End-Wuchten kann sich daher auf ein Feinwuchten beschränken, das rationell durchführbar ist und auch bei Werkstücken mit unbearbeitet bleibenden Bereichen einen vollständig ausgewogenen Rundlauf um die gegebene Drehachse gewährleistet.

Gemäß einer vorteilhaften Ausgestaltung der Erfindung werden die unbearbeitet bleibenden Werkstückbereiche in ihren vorhandenen Außenformen vermessen und einem Rechner eingegeben, der diese Istformen mit den Sollformen eines idealen Werkstückes vergleicht und die Werkstückverlagerung in Abhängigkeit von der jeweiligen Abweichung zwischen Ist- und Sollformen und unter Berücksichtigung der vorgesehenen Materialzugaben berechnet. Ein solcher Rechner erlaubt ein schnelles, automatisches Wuchten, ohne dazu das Werkstück bewegen zu müssen. Der rechnerische Vergleich zwischen den Istformen der entsprechenden Werkstückbereiche und den im Rechner gespeicherten Sollformen führt ohne besonderen konstruktiven und maschinellen Aufwand zur richtigen Werkstückverlagerung, die auch innerhalb der durch die Materialzugaben bestimmten, die Werkstückbearbeitung garantierenden Grenzen bleibt, wobei durch geeignete Programmierung des Rechners die theoretischen und auch praktischen Erfahrungen beim wuchtenden Zentrieren der Werkstücke mitberücksichtigt werden können, was vor allem für die Massenfertigung zu einer Vereinfachung der Ist-Sollformvergleiche führen kann.

Vorteilhaft kann es auch sein, wenn erfindungsgemäß nur einzelne ausgewählte Bezugspunkte vermessen und aus den erhaltenen Meßwerten die Werkstückverlagerung abgeleitet wird. Da einerseits aus Erfahrung bekannt ist, wo häufig Abweichungen in der Massenverteilung auftreten und anderseits dem wuchtenden Zentrieren auf jeden Fall noch ein eventueller Fehler des Vor-Wuchtens korrigierendes Feinwuchten im Anschluß an die Werkstückbearbeitung folgt, genügen Näherungsmethoden und durch geeignet programmierte Rechner läßt sich aus den Bezugspunkten rein rechnerisch die bei der vorhandenen Massenverteilung günstigste Lage der Drehachse bestimmen, die ein Unwuchtminimum mit sich bringt, und dementsprechend auch die Werkstückverlagerung vornehmen.

Zum Setzen von Zentrierbohrungen gibt es Maschinen mit zwei lünettenartigen Spannstöcken zur Aufnahme eines Werkstückes und zwei außerhalb der Spannstöcke angeordneten Spindelaggregaten zum Bohren der Zentrierungen. Um eine solche Maschine ohne großen Bau- und Konstruktionsaufwand zum Durchführen des Verfahrens geeignet zu machen, weisen erfindungsgemäß die Spannstöcke achsnormal schiebeverstellbare Spannfutter auf, wobei die Stelltriebe der Spannfutter über einen Rechner ansteuerbar sind, der mit entsprechend der Lage der unbearbeitet bleibenden Werkstückbereiche eines eingespannten Werkstückes verteilten, auf bestimmte Bezugspunkte ausgerichteten Sensoren zum Erfassen der Werkstückaußenformen in Verbindung steht. Das wuchtend zu zentrierende Werkstück braucht daher nur in die Spannstöcke eingespannt zu werden, so daß es sich anfangs in der Nullage, das ist die durch die zu den Spindelaggregaten koaxiale Zentrumslage der Spannfutter bestimmte Lage, befindet. Nun werden die Außenformen des tatsächlich vorhandenen Werkstückes in den unbearbeitet bleibenden Bereichen durch die Sensoren abgetastet und die festgestellten Istformen im Rechner mit den Sollformen des idealen Werkstückes verglichen oder aus den Istformen gleich die Unwuchten berechnet, wobei die sich ergebende Abweichung zwischen Ist- und Sollformen und die daraus resultierenden Unwuchten oder die rein rechnerisch ermittelten Unwuchten die Variablen zur Bestimmung der zum wuchtenden Zentrieren erforderlichen Querverlagerung des Werkstückes sind. Aufgrund der durch den Rechner ausgewerteten Daten der Querverlagerung, die allerdings noch überprüft werden, ob sie innerhalb der von den Materialzugaben abhängigen, die gewünschte Bearbeitung garantierenden Grenzwerte liegen, werden dann die Stelltriebe der Spannfutter angesteuert, die das Werkstück querverlagern und mit dieser Korrektur der Drehachsenlage das Werkstück wuchten. Nun können die Endflächen des entsprechend querverlagerten Werkstückes abgelängt und die die Drehachse festlegenden Zentrierbohrungen gesetzt werden. Das Werkstück ist wuchtend zentriert, wobei für das Wuchten nur die unbearbeitet bleibenden Werkstückbereiche und nicht auch die anschließend zu bearbeitenden Werkstückbereiche berücksichtigt sind.

Gemäß einer besonders vorteilhaften Ausgestaltung der Erfindung sind zwischen den Spannstöcken und den Spindelaggregaten Werkzeugeinheiten zur Endenbearbeitung der Werkstücke vorgesehen. Dadurch lassen sich auf einer Maschine die Werkstücke nicht nur wuchtend zentrieren, sondern bei gleichbleibender Aufspannung außer dem Ablängen auch an den Enden bearbeiten.

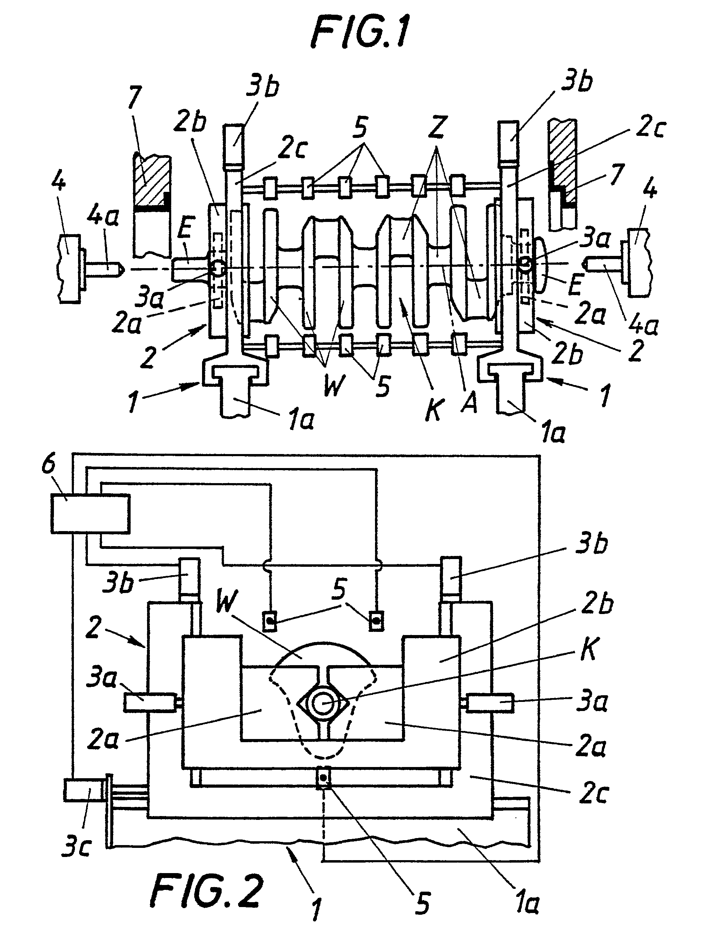

In der Zeichnung ist der Erfindungsgegenstand rein schematisch veranschaulicht, und zwar zeigen Fig. 1 und 2 eine erfindungsgemäße Maschine zum wuchtenden Zentrieren von Kurbelwellen in Seiten- und in Stirnansicht.

Um eine Kurbelwelle K, die in den Umfangsbereichen der Kurbelwangen W unbearbeitet bleibt und bei der Fertigstellung nur an den Lager- und Hubzapfen Z sowie an ihren Enden E bearbeitet wird, hinsichtlich einer Vereinfachung und Verbesserung des an die Fertigung anschließenden Wuchtens bereits beim Zentrieren vor der Bearbeitung vorwuchten zu können, wird das Werkstück in Spannstöcken 1 einer nicht weiter dargestellten Endenbearbeitungsmaschine eingespannt, welche Spannstöcke 1 achsnormal schiebeverstellbare Spannfutter 2 aufweisen. Die Spannfutter 2 bestehen dabei beispielsweise aus einem die Spannbacken 2a tragenden Hochschlitten 2b, der höhenverstellbar in einem am Lünettenkörper 1a querverschiebbaren Querschlitten 2c geführt ist, so daß durch entsprechende Betätigung der zugehörigen Stelltriebe 3a, 3b, 3c das Werkstück K gespannt und in beliebiger Richtung quer zur Werkstückachse verlagert werden kann.

Beim wuchtenden Zentrieren ist nun die Kurbelwelle K quer zu verlagern, bis die Lage der Drehachse A, die durch das Setzen von Zentrierbohrungen festgelegt wird, so eingerichtet ist, daß die Massenverteilung der tatsächlichen Kurbelwelle K eine möglichst geringe Unwucht verursacht. Dieses wuchtende Ausrichten der Drehachse erfolgt durch die entsprechende Querverlagerung der Kurbelwelle K, bevor die Spindelaggregate 4 der Endenbearbeitungsmaschine mit ihren Bohrwerkzeugen 4a die Zentrierbohrungen stirnseitig in die Werkstückenden E einbohren und damit die tatsächliche Drehachse A bestimmen, die von der rein theoretischen Drehachse des idealen Werkstückes abweicht. Für die Bestimmung von Größe und Richtung der Werkstückverlagerung werden allerdings nur die durch die unbearbeitet bleibenden Werkstückbereiche, also die Kurbelwangen W bedingten Unwuchten herangezogen, nicht aber die zu bearbeitenden Werkstückbereiche, die Zapfen Z und die Enden E. Die im Rohzustand von diesen zu bearbeitenden Werkstückbereichen hervorgerufenen Unwuchten werden ja bei der eigentlichen Werkstückbearbeitung, die gegenüber der Drehachse A zentriert ist, ohnehin beseitigt, so daß durch eine Berücksichtigung dieser Unwuchten im Hinblick auf das fertige Werkstück falsche Voraussetzungen gegeben wären.

Um nun die für die Querverlagerung bestimmenden Werkstückbereiche erfassen und rasch die korrigierende Werkstückverlagerung vornehmen zu können, gibt es den Kurbelwangen W zugeordnete Sensoren 5, die auf einzelne ausgewählte Bezugspunkte der Kurbelwangenoberfläche ausgerichtet sind und dadurch diese für die vorhandenen Wangenformen repräsentativen Bezugspunkte vermessen. Die Meßdaten werden einem Rechner 6 eingegeben, der aus ihnen die jeweiligen Querverlagerungen ermittelt, was durch Bestimmen der Abweichungen zwischen den Istformen des tatsächlichen Werkstückes und den Sollformen eines idealen Werkstückes oder durch direkte Berechnung einer minimale Unwuchten bedingenden Werkstückachsenlage erfolgen kann. Der Rechner steuert dann dementsprechend die Stelltriebe 3b, 3c der Lünetten 1 an, so daß die Kurbelwelle K in erforderlicher Richtung und Stärke querverlagert wird. Nun ist die Kurbelwelle K wuchtend ausgerichtet und nach einem Ablängen der Enden E durch ein Planbearbeiten der Stirnflächen, wobei für das Ablängen in nicht näher dargestellter Weise eine Bezugsfläche, beispielsweise eine Wangenfläche, bestimmt und danach das Längen über den Rechner axial ausgerichtet wird, lassen sich über die Spindelaggregate die Zentrierbohrungen setzen. Die Kurbelwelle K ist wuchtend zentriert.

Sind bei der Endenbearbeitungsmaschine zwischen Spindelaggregaten 4 und Lünetten 1 zusätzliche, nur angedeutete Werkzeugeinheiten 7 zur Oberflächenbearbeitung, beispielsweise dem gewünschten Profil der Werkstückenden E entsprechend schneidenbesetzte Messerköpfe, vorgesehen, können auf der Endenbearbeitungsmaschine nicht nur das wuchtende Zentrieren und das Bearbeiten der Stirnflächen, sondern darüber hinaus auch die Oberflächenbearbeitungen der gesamten Schaft- bzw. Flanschteile der Kurbelwellenenden E vorgenommen werden.

## Patentansprüche

1. Verfahren zum wuchtenden Zentrieren teilweise spanend zu bearbeitender Werkstücke, insbesondere Kurbelwellen (K), durch stirnseitiges Setzen von Zentrierbohrungen, bei dem das Werkstück (K) vor der Bearbeitung bezüglich seiner Drehachse im Sinne einer Unwuchtverminderung querverlagert und dann nach einem Ablängen an den Endflächen mit den die gewuchtete Zentrumslage und die zugehörende Drehachse (A) festlegenden Zentrierbohrungen versehen wird, dadurch gekennzeichnet, daß für die Bestimmung von Größe und Richtung der Werkstückverlagerung die durch die zu bearbeitenden Werkstückbereiche (Z) bedingten Unwuchten mißachtet und nur die durch die unbearbeitet bleibenden Werkstückbereiche (W) bedingten Unwuchten herangezogen werden.

2. Verfahren nach Anspruch 1, dadurch gekennzeichnet, daß die unbearbeitet bleibenden Werkstückbereiche (W) in ihren vorhandenen Außenformen vermessen und einem Rechner (6) eingegeben werden, der diese Istformen mit den Sollformen eines idealen Werkstückes vergleicht und die Werkstückverlagerung in Abhängigkeit von der jeweiligen Abweichung zwischen Ist- und Sollformen und unter Berücksichtigung der vorgesehenen Materialzugaben berechnet.

3. Verfahren nach Anspruch 1, dadurch gekennzeichnet, daß nur einzelne ausgewählte Bezugspunkte vermessen und aus den erhaltenen Meßwerten die Werkstückverlagerung abgeleitet wird.

4. Maschine zur Durchführung des Verfahrens nach einem der Ansprüche 1 bis 3, mit zwei lünettenartigen Spannstöcken (1) zur Aufnahme eines Werkstückes (K) und zwei außerhalb der Spannstöcke (1) angeordneten Spindelaggregaten (4) zum Bohren der Zentrierungen, dadurch gekennzeichnet, daß die Spannstöcke (1) achsnormal schiebeverstellbare Spannfutter (2) aufweisen, wobei die Stelltriebe (3b, c) der Spannfutter (2) über einen Rechner (6) ansteuerbar sind, der mit entsprechend der Lage der unbearbeitet bleibenden Werkstückbereiche (W) eines eingespannten Werkstückes (K) verteilten, auf bestimmte Bezugspunkte ausgerichteten Sensoren (5) zum Erfassen der Werkstückaußenformen in Verbindung steht.

5. Maschine nach Anspruch 4, dadurch gekennzeichnet, daß zwischen den Spannstöcken (1) und den Spindelaggregaten (2) Werkzeugeinheiten (7) zur Endenbearbeitung der Werkstücke (K) vorgesehen sind.

## Claims

1. A method for a balancing centering of workpieces which are partially to be machined, particularly crank-shafts (K), wherein centering bores are provided in the end faces, the workpiece is displaced transversely to its axis of rotation so as to reduce the unbalance before the workpiece is machined, and the workpiece is subsequently cut to length and is formed in its end faces with centering bores which define a centered position and an axis of rotation (A) for a balanced workpiece, characterized in that the unbalances which are due to the workpiece portions (7) which are to be machined are disregarded and only those workpiece portions (W) which will remain unmachined are taken into account in the determination of the extent and direction of the transverse displacement of the workpiece.

2. A method according to claim 1, characterized in that the actual external shapes of those portions (W) of the workpiece which will not be machined are measured and are entered into a computer (6), in which said actual shapes are compared with the desired shapes of an ideal workpiece, and the displacement of the workpiece is computed by said computer in dependence on any detected deviation between the actual and desired shapes and in consideration of the specified overmeasures of material.

3. A method according to claim 1, characterized in that only the locations of selected individual points of reference are measured and the displacement of the workpiece is determined in consideration of the measured values thus obtained.

4. A machine for carrying out the method according to any of claims 1 to 3, comprising two gripping units (1), which are similar to backrests and serve to hold a workpiece (K), and two spindle units (4), which are disposed outside the gripping units (1) and serve to drill or bore the centering bores, characterized in that the gripping units (1) have chucks (2), which are slidingly adjustable in directions which are normal to the axis, and the mechanisms (3b, c) for adjusting the chucks (2) are adapted to be controlled by a computer (6), which is connected to sensors (5), which are associated with respective portions (W) of a gripped workpiece (K) which will remain unmachined and said sensors are directed to predetermined points of reference on said portions and serve to detect the external shapes of the workpiece.

5. A machine according to claim 4, characterized in that tool-carrying units (7) for machining the end portions of the workpiece are provided between the gripping units (1) and the spindle units (7).

## Revendications

1. Procédé pour le centrage cinétique de pièces d'usinage devant être en partie usinées par enlèvement de copeaux, en particulier de vilbrequins (K) par placement de perçages de centrage sur les faces frontales, dans lequel la pièce d'usinage (K), avant d'être usinée, est déplacée dans le sens transversal par rapport à son axe de révolution dans le sens d'une diminution de son balourd, puis munie sur les faces d'extrémité, après un tronçonnage de mise à la longueur, des perçages de centrage définissant la position du centrage équilibré et l'axe de révolution (A) lui correspondant, caractérisé par le fait que les balourds dûs aux zones (Z) devant être usinées sur la pièce d'usinage sont négligés et que seuls les balourds dûs aux zones (W) demeurant vierges d'usinage sur la pièce d'usinage sont pris en compte pour déterminer la grandeur et le sens du déplacement de la pièce d'usinage.

2. Procédé selon la revendication 1, caractérisé par le fait que les formes extérieures des zones (W) demeurant vierges d'usinage, existant sur la pièce d'usinage sont mesurées et introduites dans un ordinateur (6) qui compare lesdites formes réelles aux formes théoriques de consigne d'une pièce d'usinage idéalisée et calcule le déplacement de la pièce d'usinage en fonction de l'écart établi pour chaque pièce d'usinage entre ses formes réelle et théorique et en prenant en compte les surépaisseurs d'usinage prévues.

3. Procédé selon la revendication 1, caractérisé par le fait que seuls des points isolés de référence sélectionnés sont mesurés et que le déplacement de la pièce d'usinage est déduit à partir des valeurs de mesure recueillies.

4. Machine prévue pour la mise en œuvre du procédé selon l'une des revendications 1 à 3, avec deux blocs (1) de serrage du genre lunette pour reprendre une pièce d'usinage (K) et deux groupes (4) de broche disposés à l'extérieur des blocs (1) de serrage pour percer les centrages, caractérisé par le fait que les blocs (1) de serrage présentent des mandrins (2) de serrage coulissants pouvant être déplacés dans le sens normal à l'axe, tandis que les mécanismes d'actionnement (3b, c) des mandrins (2) de serrage peuvent être excités par l'intermédiaire d'un ordinateur (6) qui est en communication avec des palpeurs (5) qui, orientés sur des points de références déterminés, sont répartis en correspondance avec la position des zones (W) demeurant vierges d'usinage sur une pièce d'usinage (K) serrée pour établir le relevé des formes extérieures de la pièce.

5. Machine selon la revendication 4, caractérisé par le fait qu'une unité d'outil (7) pour usinage les extremités de la pièce d'usinage (K) est disposée entre les blocs de serrage (1) et les groupes de broche (4).

## FIG.1

## FIG.2